# EUROPÄISCHE PATENTANMELDUNG

(11) **EP 1 233 167 A2**
(43) Veröffentlichungstag der Anmeldung: **21.08.2002**
(21) Anmeldenummer: 02002155.6
(22) Anmeldetag: 29.01.2002
(51) Int. Cl.: F02F 3/00, F16B 11/00

(54) **Schraubensicherung für gebaute Kolben**

(30) Priorität: 16.02.2001 DE 10107425
(71) Anmelder: MAHLE GMBH, D-70376 Stuttgart (DE)
(72) Erfinder: Lochmann, Roland, 71672 Marbach (DE)

(57) **Zusammenfassung**

Die Dehnschrauben von gebauten Kolben sollen durch eine einfache Schraubensicherung gegen Lösen gesichert sein.

Hierzu sind die Schrauben durch einen Klebstoff fixiert, der aus einer Mischung aus Zwei-Komponentenharz und Festschmierstoff besteht.

## Beschreibung

Die Erfindung betrifft eine Schraubensicherung für gebaute Kolben, bei denen ein Kolbenboden mittels Dehnschrauben mit einem Kolbenunterteil verschraubt ist.

Insbesondere bei kleinen gebauten Kolben kann die geringe Losdrehsicherheit der Schrauben ein Problem darstellen. Die Lösemomente betragen häufig nur ca. 30 % der Anzugsmomente. Bekannte mechanische Sicherungen haben häufig niedrigere Schraubenvorspannkräfte zur Folge, sind teuer in der Herstellung und zum Teil gerade bei kleinen Kolben nur schwer montierbar.

Die Erfindung beschäftigt sich daher mit dem Problem, für gebaute Kolben eine Schraubensicherung zu finden, die zu einer deutlichen Erhöhung der Lösemomente führt und einfach herzustellen ist.

Dieses Problem wird gelöst durch das kennzeichnende Merkmal des Anspruchs 1. Vorteilhafte Weiterbildungen sind Gegenstand der Unteransprüche. Der Klebstoff, der aus einer Mischung aus Festschmierstoff und Zwei-Komponentenharz besteht, wird vorzugsweise vor dem Auftragen auf die zu verklebenden Flächen angerührt und gleichmäßig durchmischt.

Bei der Herstellung des Klebstoffs kann MoS₂ in Pastenform zugegeben werden.

Bei der Montage sorgt die Schmiermittelkomponente für niedrige und konstante Reibwerte. Nach dem Aushärten liegen die Lösemomente auf Höhe der Anzugsmomente, teilweise auch darüber.

Die Klebstoff-Mischung kann entweder am Gewinde oder an der Auflagefläche des Schraubenkopfs aufgebracht werden.

Die beim Anziehen der Schrauben aus dem Kontaktbereich ausgepreßte Klebstoffmasse bildet am Schraubenkopf bzw. an der Mutter eine umlaufende Hohlkehle mit etwa dreieckförmigem Querschnitt.

Da diese Hohlkehle im Motorbetrieb nicht angegriffen wird, stellt sie ein relativ sicheres Erkennungszeichen für eine Originalmontage dar.

## Patentansprüche

1. Schraubensicherung für gebaute Kolben, bei denen ein Kolbenboden mittels Dehnschrauben mit einem Kolbenunterteil verbunden ist,
**dadurch gekennzeichnet,**
**daß** die Sicherung klebstoffartig ist und der Klebstoff aus einer Mischung aus einem Zwei-Komponentenharz und einem Festschmierstoff oder Schmierpaste besteht.

2. Schraubensicherung nach Anspruch 1,
**dadurch gekennzeichnet,**
**daß** der Festschmierstoff MoS₂ oder Graphitpulver oder eine Mischung aus beiden ist.

3. Schraubensicherung nach einem der vorhergehenden Ansprüche,
**dadurch gekennzeichnet,**
**daß** als Festschmierstoff zusätzlich oder ausschließlich BN (Bornitrid) vorhanden ist.

4. Schraubensicherung nach einem der vorhergehenden Ansprüche,
**dadurch gekennzeichnet,**
**daß** der Klebstoff auf dem Gewinde der Verschraubung aufgebracht ist.

5. Schraubensicherung nach einem der vorhergehenden Ansprüche,
**dadurch gekennzeichnet,**
**daß** der Klebstoff auf der Anlagefläche des Schraubenkopfs bzw. der Mutter aufgebracht ist.

6. Schraubensicherung nach Anspruch 5,
**dadurch gekennzeichnet,**
**daß** nach dem Anziehen der Verschraubung überschüssiger Klebstoff radial außerhalb der Auflagefläche des Schraubenkopfs bzw. der Mutter einen umlaufenden Ring mit Hohlkehlenquerschnitt oder Dreieckquerschnitt bildet.

7. Schraubensicherung nach Anspruch 6,
**dadurch gekennzeichnet,**
**daß** die Auflagefläche des Schraubenkopfs sechseckig ist.

8. Schraubensicherung nach Anspruch 6 oder 7,
**dadurch gekennzeichnet,**
**daß** der Auflagebund des Schraubenkopfs bzw. der Mutter profiliert ist.
